(19) Europäisches Patentamt
European Patent Office
Office européen des brevets

(11) Veröffentlichungsnummer: **0 098 965**
**A1**

(12) # EUROPÄISCHE PATENTANMELDUNG

(21) Anmeldenummer: 83105559.5

(22) Anmeldetag: 07.06.83

(51) Int. Cl.³: C 09 B 45/01
C 09 B 55/00, C 09 B 67/00

(30) Priorität: 19.06.82 DE 3222966

(43) Veröffentlichungstag der Anmeldung: 25.01.84 Patentblatt 84/4

(84) Benannte Vertragsstaaten: CH DE FR GB LI

(71) Anmelder: BAYER AG
Zentralbereich Patente, Marken und Lizenzen
D-5090 Leverkusen 1, Bayerwerk(DE)

(72) Erfinder: Linhart, Karl, Dr.
Heymannstrasse 65
D-5090 Leverkusen 1(DE)

(72) Erfinder: Boehmke, Günter, Dr.
Kurt-Schumacher-Ring 152
D-5090 Leverkusen 1(DE)

(72) Erfinder: Gleinig, Harald, Dr.
Eichholzer Weg 100
D-5068 Odenthal(DE)

(72) Erfinder: Gomm, Walter, Dr.
Johann-Burum-Strasse 21
D-5060 Bergisch-Gladbach(DE)

(54) **Verfahren zur Herstellung konzentrierter organischer oder wässrigorganischer Lösungen von Chromkomplexen von Azo- bzw. Azomethinfarbstoffen.**

(57) Verfahren zur Herstellung konzentrierter organischer oder wäßrig-organischer Lösungen von Chromkomplexen von Azo- bzw. Azomethinfarbstoffen, dadurch gekennzeichnet, daß man die metallfreien Farbstoffe in organischem oder wäßrig-organischem Medium mit dem System Chrom-VI-Säure/Alkanolamin bzw. Alkanolammoniumverbindung chromiert.

EP 0 098 965 A1

0098965

BAYER AKTIENGESELLSCHAFT 5090 Leverkusen, Bayerwerk

Zentralbereich
Patente, Marken und Lizenzen My/m-c

Verfahren zur Herstellung konzentrierter organischer oder wäßrig-organischer Lösungen von Chromkomplexen von Azo- bzw. Azomethinfarbstoffen

Gegenstand der vorliegenden Erfindung ist ein Verfahren zur Herstellung konzentrierter organischer oder wäßrig-organischer Lösungen von Chromkomplexen von Azo- bzw. Azomethinfarbstoffen, welches dadurch gekennzeichnet ist, daß man die metallfreien Farbstoffe in organisch-wäßrigen oder organischen Medium mit dem System Chrom-VI-Säure/Alkanolamin bzw. Alkanolammoniumverbindung chromiert.

Das Alkanolamin bzw. die Alkanolammoniumverbindung wird dabei in mindestens äquimolaren Mengen bezogen auf die Chrom-VI-Säure eingesetzt, vorzugsweise in Mengen von 1-5 Mol pro Mol Chrom-VI-Säure. In dem System bilden sich die Alkanolammonium-bichromate, die auch als solche zur Chromierung eingesetzt werden können.

Die Chromierung erfolgt in organischen oder wäßrig-organischem Medium bei Temperaturen von etwa 20-110°C, vorzugsweise etwa 80-100°C, und pH-Werten von etwa 6-10. In Abhängigkeit von dem Verhältnis Chrom:Farbstoff und dem pH-Wert bilden sich dabei die 1:1- oder die 1:2-Komplexe. Bei Verwendung von zwei verschiedenen

Ausgangsfarbstoffen erhält man überwiegend die einheitlichen Mischkomplexe. Die Einstellung des pH-Wertes bei der Metallisierung erfolgt in üblicher Weise.

Das System Alkanolamin - Chrom-VI-Säure - organisches Lösungsmittel bzw. Wasser - organisches Lösungsmittel ist bei Raumtemperatur längere Zeit haltbar. Die Redoxwirkung in dem System nimmt erst mit steigender Temperatur im gewünschten Maße zu, insbesondere in Gegenwart der zu chromierenden Farbstoffe. Die simultan ablaufende Reduktion und Komplexierung ist im allgemeinen nach Erwärmen auf 80-100°C beendet. Die Reaktion läßt sich mit Hilfe der Differential-Puls-Polarographie schnell und mit hoher Genauigkeit verfolgen. Dadurch wird die Herstellung praktisch chromfreier Farbstoffe ermöglicht, ohne daß ein Farbstoffüberschuß verwendet werden muß. Durch den Übergang Chrom-VI - Chrom-III läßt sich das Ende der Reaktion einwandfrei bestimmen und zu lange Reaktionszeiten werden vermieden.

Geeignete Alkanolamine sind die Mono-, Di- und Trialkanolamine.

Bevorzugte Alkanolamine sind solche der Formel

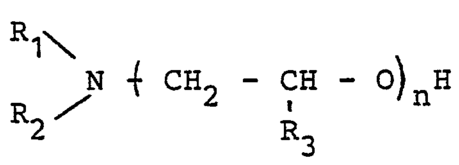

(I)

worin

$R_1$, $R_2$ = H, Alkyl, Cycloalkyl,
$R_3$ = H, Alkyl, insbesondere $CH_3$, $C_2H_5$,
n = 1-10,

bevorzugte Alkanolammoniumverbindungen solche der Formel

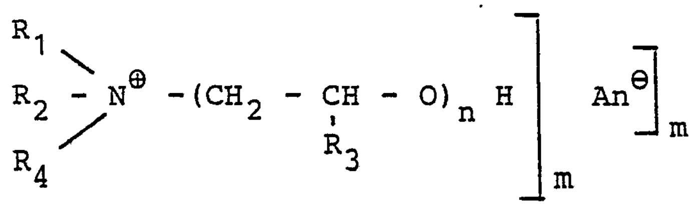

(II)

worin

$R_1$-$R_3$ und n die oben angegebene Bedeutung haben,
$R_4$ für H, Alkyl oder Cycloalkyl steht und
$An^{\ominus}$ für $OH^{\ominus}$ oder das Anion einer organischen oder anorganischen Säure mit einem $pK_3$-Wert $< 10^{-3}$ steht und
m = 1, 2 oder 3

bedeutet.

Die Alkyl- und Cycloalkylreste können substituiert sein, beispielsweise durch Hydroxy oder Alkoxy. Sie können insbesondere auch als Reste $-(CH_2 - \underset{R_3}{CH} - O)_n H$ vorliegen.

Geeignete Verbindungen (I) sind beispielsweise:

Ethanolamin, Diethanolamin, Triethanolamin, 2-Dimethylaminoethanol, N-Butyldiethanolamin, Diisopropanolamin, Triisopropanolamin, 2-Dimethylaminoethoxy-ethanol, Tris-(2-hydroxyethoxyethyl)-amin sowie Umsetzungsprodukte von 1-10 Mol Ethylenoxid und/oder Propylenoxid mit Ammoniak, Methylamin, Dimethylamin, Ethylamin, Diethylamin, Butylamin.

Geeignete Verbindungen (II) sind beispielsweise die Salze der Verbindungen (I) mit folgenden Säuren: Essigsäure, Propionsäure, Citronensäure, Milchsäure, insbesondere aber auch die entsprechenden Salze sulfogruppenhaltiger metallfreier Azo- und Azomethinfarbstoffe.

Geeignete quartäre Basen (II) sind beispielsweise Tetra-(2-hydroxyethyl)-ammoniumhydroxid, Tetra-[2-(2-hydroxy-ethoxy-ethyl)]-ammoniumhydroxid.

Das Verfahren liefert bei Verwendung geeigneter Lösungsmittel beispielsweise Amiden wie Formamid, Dimethylformamid, ε - Caprolactam, Pyrrolidon, N-Methylpyrrolidon, Harnstoff, Hydroxypropionitril, Mono-, Di- und Trialkanolamine, insbesondere solche der Formel I, ein- oder mehrwertige Alkoholen deren Mono- oder Diether und Mono- oder Diester wie Glykol, Ethylglykol, Diethylenglykol, Diethylenglykolmonoethylether, Diethylenglykolmonopropyl- und -monobutylether, Propylenglykol, Dipropylenglykol und deren Ester, Tetrahydrofurfurylalkohol oder insbesondere auch Gemischen aus ε-Caprolactam und Tetrahydrofurfurylalkohol konzentrierte, stabile Lösungen, die beispielsweise bis etwa 50 % Wasser enthalten können.

Vorzugsweise wird die Reaktion so durchgeführt, daß die Lösungen 20-80 Gew.-% Lösungsmittel, insbesondere 25-50 Gew.-%, 20-50 Gew.-% Wasser und 10-50 Gew.-% Farbstoff enthalten.

Das Verfahren wird im allgemeinen in der Weise durchgeführt, daß die Chrom-VI-Säure ($CrO_3$) in Wasser mit mindestens einem Mol des Alkanolamins bei Raumtemperatur gemischt wird, anschließend eine organische oder wäßrigorganische Lösung oder Suspension des Farbstoffs zugetropft wird und dann erwärmt wird. Es kann aber auch so gearbeitet werden, daß das Gemisch aus Chrom-VI-Säure und Alkanolamin in Wasser zu der Farbstofflösung bzw. Farbstoffsuspension bei Raumtemperatur zugesetzt und anschließend erwärmt wird. Die Chromierung ist im allgemeinen nach etwa 1 - 2 Stunden bei etwa 80-100°C beendet.

Vorteilhafterweise wird auch nach Eintopfverfahren gearbeitet werden, bei denen bereits Diazotierung und/oder Kupplung in Gegenwart des organischen Lösungsmittels durchgeführt werden und keine Zwischenisolierungen erfolgen.

Das Verfahren wird dabei beispielsweise so ausgeführt, daß man die Diazokomponente in einem Gemisch aus Wasser und Lösungsmittel löst oder aufschlämmt und nach bekannten Methoden, vorzugsweise mit $NaNO_2$ diazotiert. Nach Zugabe der Kupplungskomponente läßt man auskuppeln und metallisiert. Zur Herstellung von Mischkomplexen kann man Diazotierung und Kupplung für die Einzelfarbstoffe in getrennten Ansätzen vornehmen und nach Vereinigung die gemeinsame Metallisierung durchführen.

Im Falle der Verwendung von Salzen der zu metallisierenden Farbstoffe mit den Alkanolaminen I setzt man zweckmäßigerweise pro Mol Säuregruppe mindestens 1 Mol I ein. Vorzugsweise wird auch in diesem Fall pro Mol Cr-VI-Säure zusätzlich noch ein Mol I verwendet.

Als metallisierbare Farbstoffe kommen Mono-, Dis- oder Polyazo- oder Azomethin-Farbstoffe in Frage, die vor der Metallisierung als metallkomplexbildende Gruppen o,o'-Dihydroxy-, o-Hydroxy-o' amino-, o-Hydroxy-o' alkoxy, o-Hydro-o'-carboxy oder o-Alkoxy-o'-amino-azo- oder -azomethingruppen aufweisen. Die Farbstoffe können frei von sauren Gruppen sein oder saure Gruppen, vorzugsweise Sulfon- oder Carbonsäuregruppen, tragen; sie können ferner Sulfonamide- oder Sulfongruppen enthalten und durch weitere, bei Azo- und Azomethinfarbstoffen übliche, nichtionische Substituenten substituiert sein, beispielsweise durch Fluor-, Chlor-, Nitro-, Cyano-, Alkyl-, Alkoxy-, Aryl-, Alkanolamino-, Alkoxycarbonylamino und Benzoylaminogruppen, sie können aber auch externe kationische Gruppen tragen. Entsprechende Chromkomplexe sind in der Patentliteratur vielfach beschrieben, beispielsweise in den deutschen Patent- und Offenlegungsschriften 870 305, 937 367, 940 483, 945 432, 953 827, 957 506, 960 485, 1 005 644, 1 047 340, 1 049 021, 1 072 338, 1 077 351, 1 191 058, 1 270 204, 1 254 785, 1 270 204, 1 444 635, 1 444 655, 1 444 658, 1 544 361, 2 119 830, 1 008 254, 1 012 007, 1 023 539, 1 079 247, 1 111 318, 1 133 846, 1 156 913, 1 265 324, 1 271 857, 1 444 605, 1 544 580, 1 619 649, 1 644 143, 1 902 867, 1 952 305, 2 210 260, 2 444 746,

die europäische Patentschrift 0 041 040, die französischen Patentschriften 1 353 364, 1 380 632, 950 916, 1 161 640, 1 269 496, 1 269 497, 1 272 728, 1 272 729, 1 273 542, 1 352 623, 1 376 128 und 1 518 833, den britischen Patentschriften 553 658, 564 094, 553 480, 569 094 und 717 450.

Sulfogruppenhaltige Farbstoffe werden in Form ihrer Alkali-Salze, vorzugsweise Li-Salze, oder in Form ihrer Alkanolamin- oder Alkanolammonium-Salze eingesetzt.

Das erfindungsgemäße Verfahren liefert auch bei Verwendung stöchiometrischer Mengen Chrom Farbstofflösungen, die praktisch frei von nicht komplex gebundenem Chrom sind. Für die Chromierung können die feuchten Preßkuchen der Farbstoffe eingesetzt werden. Das Verfahren verläuft sehr rasch.

Beispiel 1

322,1 g (= 0,88 Mol) des Farbstoffs 4-Nitro-2-amino-hydroxybenzol → 1-Acetylamino-7-hydroxy-naphthalin und 384,2 g (= 1,12 Mol) des Farbstoffs 2-Amino-1-hydroxybenzol-4-sulfonamid → 2-Hydroxynaphthalin werden in ein Gemisch aus 600 ml Wasser, 800 g Ethylenglykol und 447 g (= 3 Mol) Triethanolamin eingetragen und auf 100°C erwärmt. Innerhalb von 30 Minuten setzt man eine Lösung von 100 g (= 1 Mol) Cr-VI-oxid in 200 ml Wasser zu. Die Metallisierung ist nach Zugabe beendet. Man erhält eine konzentrierte Lösung des 1:2-Chrom-Mischkomplexes, die als solche zum Färben eingesetzt werden kann bzw. aus welcher der Farbstoff in üblicher Weise isoliert werden kann.

Beispiel 2

618 g (= 2 Mol) des Farbstoffs 5-Nitro-2-amino-1-hydroxybenzol (54,7 Mol-%) + 4-Nitro-2-amino-1-hydroxybenzol (45,3 Mol-%) —— 2-Hydroxynaphthalin werden in 1600 g Ethylenglykol und 447 g (= 3 Mol) Triethanolamin verrührt und auf 100°C erwärmt. Im Verlaufe von 45 Minuten wird eine Lösung von 100 g (= 1 Mol) Cr-VI-oxid in 200 ml Wasser zugesetzt. Man erhält eine Lösung des 1:2-Chrom-Mischkomplexes, der Wolle oder Polyamid schwarz färbt.

Beispiel 3

439 g (= 1 Mol) des Farbstoffs 6-Nitro-1-amino-2-hydroxynaphthalin-4-sulfonsäure ⟶ 2-Hydroxynaphthalin und 347 g (= 1 Mol) des Farbstoffs 4-Nitro-2-aminophenol ⟶ 2-Hydroxynaphthalin (33 Mol-%) + 1-Acetylamino-7-hydroxynaphthalin (67 Mol-%) werden in 3700 ml Wasser und 447 g (= 3 Mol) Triethanolamin verrührt und auf 100°C erwärmt. Im Verlaufe von 45 Minuten setzt man eine Lösung von 100 g Cr-VI-oxid (= 1 Mol) in 200 ml Wasser zu. Man erhält eine lagerstabile Lösung des 1:2-Chrom-Mischkomplexes, der Wolle in grauen Farbtönen färbt.

Verwendet man anstelle von Triethanolamin entsprechende Mengen Tris-(ß-hydroxyethoxyethyl)-amin oder Tetrahydroxyethylammoniumhydroxid, erhält man ebenfalls in glatter Reaktion lagerstabile Lösungen des Farbstoffs.

Beispiel 4

439 g (= 1 Mol) des Farbstoffs 6-Nitro-1-amino-2-hydroxynaphthalin-4-sulfonsäure ⟶ 2-Hydroxynaphthalin (sauer isoliert) werden mit 1200 ml Wasser, 83,2 g Lithiumhydroxidhydrat (2 Mol) und 240 g 2-Pyrrolidon verrührt (der pH dieses Gemisches beträgt 8,5) und auf 75°C erwärmt. Im Verlaufe von 60 Minuten setzt man eine Lösung von 50 g Chrom-VI-oxid (0,5 Mol) in 50 g Wasser und 150 g Tris-(ß-hydroxyethoxyethyl)-amin (0,53 Mol) zu. Die Temperatur hält sich während der Zugabe ohne weitere Heizung. Nach weiteren 60 Minuten bei dieser Temperatur ist die Chromierung beendet.

Man erhält eine flüssige, stabile Lösung des schwarzfärbenden 1:2-Chrom-Komplexfarbstoffes.

Patentansprüche:

1. Verfahren zur Herstellung konzentrierter organischer oder wäßrig-organischer Lösungen von Chromkomplexen von Azo- bzw. Azomethinfarbstoffen, dadurch gekennzeichnet, daß man die metallfreien Farbstoffe in organischem oder wäßrig-organischem Medium mit dem System Chrom-VI-Säure/Alkanolamin bzw. Alkanolammoniumverbindung chromiert.

2. Verfahren nach Anspruch 1, dadurch gekennzeichnet, daß man pro Mol Chrom-VI-Säure mindestens 1 Mol Alkanolamin bzw. Alkanolammoniumverbindung verwendet.

3. Verfahren nach Ansprüchen 1 und 2, dadurch gekennzeichnet, daß man als Alkanolammoniumverbindung die Alkanolammoniumsalze sulfogruppenhaltiger Azo- oder Azomethinfarbstoffe verwendet.

4. Verfahren nach Ansprüchen 1-3, dadurch gekennzeichnet, daß man Alkanolamine der Formel

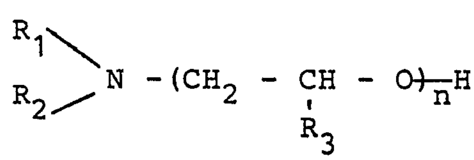

mit

$R_1$, $R_2$ = H, Alkyl, Cycloalkyl,
$R_3$ = H, Alkyl,
n = 1-10

oder

Alkanolammoniumverbindungen der Formel

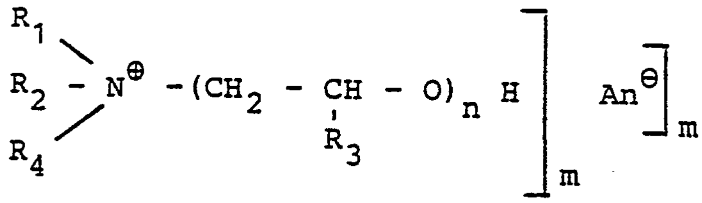

mit

| | |
|---|---|
| $R_1$, $R_2$, $R_4$ | = H, Alkyl, Cycloalkyl, |
| $R_3$ | = H, Alkyl, |
| n | = 1-10 |
| $An^{\ominus}$ | = $OH^{\ominus}$ oder Anion einer organischen oder anorganischen Säure mit einem $pK_3$ Wert $10^{-3}$ und |
| m | = 1, 2 oder 3 |

verwendet.

5. Verfahren nach Ansprüchen 1-4, dadurch gekennzeichnet, daß man in Gegenwart mehrwertiger Alkohole bzw. deren Ether oder Ester metallisiert.

0098965

Europäisches Patentamt

# EUROPÄISCHER RECHERCHENBERICHT

Nummer der Anmeldung

EP 83 10 5559

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 285 441 (BAYER)<br>* Seiten 1,2 *<br>--- | 1-5 | C 09 B 45/01<br>C 09 B 55/00<br>C 09 B 67/00 |
| Y | US-A-3 051 696 (DETTWYLER)<br>* Spalten 1,2 *<br>--- | 1-5 | |
| Y | FR-A-2 414 528 (BAYER)<br>* Seite 1 *<br>----- | 1-5 | |

| RECHERCHIERTE SACHGEBIETE (Int. Cl. ³) |
|---|
| C 09 B 45/00<br>C 09 B 55/00<br>C 09 B 67/00 |

Der vorliegende Recherchenbericht wurde für alle Patentansprüche erstellt.

| Recherchenort | Abschlußdatum der Recherche | Prüfer |
|---|---|---|
| DEN HAAG | 30-09-1983 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82